# EUROPÄISCHE PATENTSCHRIFT

(11) **EP 3 523 930 B1**
(45) Veröffentlichungstag und Bekanntmachung des Hinweises auf die Patenterteilung: **08.04.2020**
(21) Anmeldenummer: 18704226.2
(22) Anmeldetag: 08.02.2018
(51) Int. Cl.: H04L 12/46, H04W 4/48, H04L 29/06, H04L 29/08

(54) **KRAFTFAHRZEUG MIT EINEM FAHRZEUGINTERNEN DATENNETZWERK SOWIE VERFAHREN ZUM BETREIBEN DES KRAFTFAHRZEUGS**
MOTOR VEHICLE COMPRISING AN INTERNAL DATA NETWORK AND METHOD FOR OPERATING THE MOTOR VEHICLE
VÉHICULE À MOTEUR MUNI D'UN RÉSEAU DE DONNÉES INTERNE AU VÉHICULE AINSI QUE PROCÉDÉ DE FONCTIONNEMENT DU VÉHICULE À MOTEUR

(30) Priorität: 09.02.2017 DE 102017202022
(43) Veröffentlichungstag der Anmeldung: 14.08.2019
(73) Patentinhaber: Audi AG, 85045 Ingolstadt (DE)
(72) Erfinder: SCHOCH, Elmar, 85049 Ingolstadt (DE)
(86) Internationale Anmeldenummer: PCT/EP2018/053121
(87) Internationale Veröffentlichungsnummer: WO 2018/146169

(56) Entgegenhaltungen:
- DE-A1-102015 209 361
- MALAGUTI GIORGIO ET AL: "Comparison on technological opportunities for in-vehicle Ethernet networks", 2013 11TH IEEE INTERNATIONAL CONFERENCE ON INDUSTRIAL INFORMATICS (INDIN), IEEE, 29. Juli 2013 (2013-07-29), Seiten 108-115, XP032498257, DOI: 10.1109/INDIN.2013.6622867 [gefunden am 2013-10-06] in der Anmeldung erwähnt

## Beschreibung

Die Erfindung betrifft ein Kraftfahrzeug mit einem fahrzeuginternen Datennetzwerk, durch welches Steuergeräte des Kraftfahrzeugs zum Austauschen von Nachrichten miteinander gekoppelt sind. Zu der Erfindung gehört auch ein Verfahren zum Betreiben des fahrzeuginternen Datennetzwerks in dem Kraftfahrzeug.

In einem Kraftfahrzeug können Steuergeräte durch ein Datennetzwerk untereinander verbunden oder gekoppelt sein, damit die Steuergeräte Nachrichten untereinander austauschen können. Durch eine solche Nachricht kann beispielsweise ein Messwert oder ein Steuerbefehl mitgeteilt werden. Eine Nachricht stellt dabei zumindest ein Datenpaket dar, das von einem ersten der Steuergeräte, dem Absender, an zumindest ein anderes Steuergerät, einem jeweiligen Adressaten oder Empfänger, ausgesendet wird. Eine Nachricht kann ein oder mehrere Datenpakete umfassen. Zum Übermitteln der jeweiligen Nachricht kann in dieser der Empfänger angegeben sein, beispielsweise durch eine Angabe einer Adresse und einer Kennnummer des empfangenden Steuergeräts.

Durch einen Defekt in einem Steuergerät oder auch durch eine nichtautorisierte Manipulation des Steuergeräts kann durch dieses Steuergerät der Betrieb des Kraftfahrzeugs gestört oder manipuliert werden, indem über dieses defekte oder manipulierte Steuergerät Nachrichten an andere Steuergeräte ausgesendet werden, die dann ebenfalls ihr Betriebsverhalten ändern.

Aus der DE 103 19 365 A1 ist ein Computersystem für ein Fahrzeug bekannt, das Schutz bietet gegen Nachrichten, die von außerhalb des Kraftfahrzeugs über das Internet an Steuergeräte des Kraftfahrzeugs gesendet werden. Hierzu wird der aus dem Internet an dem Kraftfahrzeug eintreffende Datenstrom durch eine Firewall gefiltert. Steuergeräte untereinander können sich weiterhin gegenseitig manipulieren oder stören.

Aus der DE 10 2013 021 231 A1 ist ein Fahrerassistenzsystem bekannt, das zwei Mikroprozessoren aufweist, um mit dem einen die Assistenzfunktion bereitzustellen, während der andere Mikroprozessor für die Kommunikation genutzt wird. Hierdurch ist innerhalb des Steuergeräts des Fahrerassistenzsystems ein Schutz der Assistenzfunktion gegen eine Manipulation gegeben. Dies bedeutet aber, dass jedes zu schützende Steuergerät selbst zwei Mikroprozessoren zum Bereitstellen der Schutzfunktion benötigt. Das Datennetzwerk selbst ist weiterhin ungeschützt.

Aus der DE 10 2011 007 437 A1 ist eine Schaltungsanordnung zur Datenübertragung zwischen Prozessorbausteinen bekannt. Es ist beschrieben, dass Steuergeräte einen bestimmten ASIL (ASIL - Automotive Safety Integrity Level, Sicherheitsanforderung) erfüllen können müssen. Es gibt entsprechend Steuergeräte unterschiedlicher Sicherheitsanforderungen.

In der US 2016/0255154 A1 ist ein Kraftfahrzeug mit einem Datennetzwerk beschrieben, das in Sicherheitszonen eingeteilt sein kann, die in einer Baumstruktur organisiert sein können. Die Einteilung in Sicherheitszonen wird durch die entsprechende Wahl der Netzwerk-Topologie erreicht.

Die US 2014/0306826 A1 beschreibt ein Kraftfahrzeug, in welchem Geräte an ein Kommunikationsnetzwerk angeschlossen sein können, wobei jedes Gerät je nach Sicherheitsanforderung an eine andere Zone des Kommunikationsnetzwerks angeschlossen sein kann. Jede Zone kann mittels eines Switches eines Ethernet-Netzwerks realisiert sein, wobei die Switches und damit die Zonen dann durch Firewalls getrennt sind.

Aus dem wissenschaftlichen Beitrag von Malaguti et al. (G. Malaguti, M. Dian, C. Ferraresi, M. Ruggeri, "Comparison on Technological Opportunities for In-Vehicle Ethernet Networks", Proceedings of INDIN 2013, IEEE International Conference on Industrial Informatics, Vol. 11, 2013, Seiten 108-115) ist bekannt, dass in einem Kraftfahrzeug Nachrichten unterschiedlicher Priorität dadurch voneinander unterschieden werden können, dass sie in unterschiedlichen VLANs versendet werden. DE 10 2015 209361 beschreibt ein aus mehreren VLAN bestehendes Fahrzeugdatennetzwerk, bei dem die VLANs untereinander Daten austauschen können.

Der Erfindung liegt die Aufgabe zugrunde, in einem Datennetzwerk eines Kraftfahrzeugs die Manipulation oder Störung von Steuergeräten untereinander zu vermeiden oder verhindern.

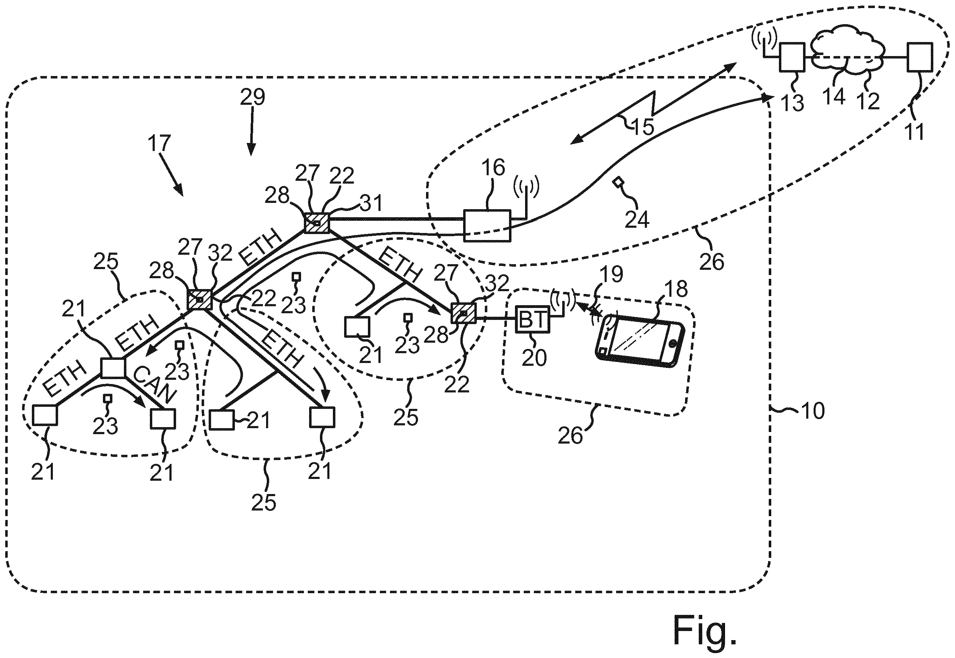

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figur beschrieben.

Durch die Erfindung ist ein Kraftfahrzeug mit einem fahrzeuginternen Datennetzwerk bereitgestellt. Durch das Datennetzwerk sind Steuergeräte des Kraftfahrzeugs zum Austauschen von Nachrichten miteinander gekoppelt. Mit "fahrzeugintern" ist hierbei gemeint, dass es um ein Datennetzwerk geht, dass die Steuergeräte untereinander vernetzt, also insbesondere nicht primär darum, dass ein Steuergerät auch mit einer fahrzeugexternen oder fahrzeugfremden Datenquelle, wie beispielsweise einem Server des Internets, gekoppelt ist.

Um nun die Steuergeräte gegenseitig zu schützen, ist erfindungsgemäß das Datennetzwerk in mehrere Sicherheitszonen eingeteilt, innerhalb welcher jeweils zumindest eines der Steuergeräte angeordnet ist. Beispielsweise können in einer Sicherheitszone Steuergeräte mit gleicher Sicherheitsanforderung oder eine Gruppe von Steuergeräten mit vorgegebenen Sicherheitsanforderungen zusammengefasst sein. Eine Sicherheitszone stellt somit in dem Datennetzwerk ein Segment dar, an welches jeweils zumindest eines der Steuergeräte angeschlossen ist. Die Sicherheitszonen sind in dem Datennetzwerk voneinander getrennt, aber dennoch für einen bedingten Nachrichtenaustausch untereinander gekoppelt. Hierzu sind Datenkontrolleinrichtungen oder Domänenkontrolleinrichtungen bereitgestellt, von denen jede jeweils zumindest zwei der Sicherheitszonen voneinander trennt und aber dazu eingerichtet ist, zumindest eine der besagten Nachrichten zwischen zumindest zwei der von ihr getrennten Sicherheitszonen zu übertragen, falls die Nachricht ein vorbestimmtes Sicherheitskriterium erfüllt, und aber die Übertragung der Nachricht zu blockieren, falls die Nachricht das Sicherheitskriterium verletzt. Die Trennung der Sicherheitszonen besteht also darin, dass eine Nachricht zwischen jeweils zwei Sicherheitszonen nur nach einer vorherigen Kontrolle der Nachricht übertragen wird. Eine Nachricht kann somit also nicht beliebig in dem Datennetzwerk ausgebreitet oder verbreitet werden. Eine Nachricht kommt nur bis zum Ende der Sicherheitszone, in der die Nachricht erzeugt wurde, also bis zur Domänenkontrolleinrichtung oder bis zu den Domänenkontrolleinrichtungen, welche jeweils die Sicherheitszone von zumindest einer weiteren Sicherheitszone trennen. Durch die Domänenkontrolleinrichtung wird unabhängig von dem sendenden Steuergerät das Sicherheitskriterium überprüft, also erkannt, ob die Nachricht zulässig ist und deshalb in zumindest eine weitere Sicherheitszone übertragen werden kann oder ob die Nachricht unzulässig und damit zu blockieren ist.

Durch die Erfindung ergibt sich der Vorteil, dass ein defektes oder manipuliertes Steuergerät durch Nachrichten nur Steuergeräte innerhalb seiner eigenen Sicherheitszone erreichen kann und eine Beeinflussung zumindest eines weiteren der Steuergeräte in zumindest einer anderen der Sicherheitszonen durch die Überprüfung des Sicherheitskriteriums in zumindest einer der Domänenkontrolleinrichtungen verhindert wird.

Es ist bei der Erfindung von Vorteil, dass zumindest zwei der Sicherheitszonen nur logisch voneinander getrennt sind, indem die logisch voneinander getrennten Sicherheitszonen jeweils als ein VLAN (Virtual Local Area Network) realisiert sind. Hierdurch kann also eine logische Segmentbildung oder Zonenbildung auch bei Nutzung einer gemeinsamen Datenleitung für die Sicherheitszonen erreicht werden. Dies weist den Vorteil auf, dass zum Bereitstellen mehrerer Sicherheitszonen nicht jeweils eine eigene Datenleitung bereitgestellt sein muss.

Zu der Erfindung gehören auch Weiterbildungen, durch deren Merkmale sich zusätzliche Vorteile ergeben.

Um Sicherheitszonen voneinander zuverlässig zu trennen, ist bevorzugt vorgesehen, dass zumindest zwei der Sicherheitszonen physikalisch voneinander getrennt sind, indem jede der physikalisch getrennten Sicherheitszonen eine eigene Datenleitung aufweist. Insbesondere können auch zwei Sicherheitszonen, die auf der gleichen Netzwerktechnologie basieren, zum Beispiel Ethernet, untereinander physikalisch auf diese Weise getrennt werden. Die physikalische Trennung weist den Vorteil auf, dass selbst in Kenntnis der MAC-Adresse (MAC - Media Access Control) es durch eine Manipulation der Nachrichten weiterhin unmöglich bleibt, ein Steuergerät in einer physikalisch getrennten Sicherheitszonen mit einer manipulierten Nachricht zu adressieren oder zu erreichen.

Zumindest eine der Kontrolleinrichtungen weist bevorzugt zum Trennen der von ihr zu trennenden Sicherheitszonen eine Firewall und/oder ein Nachrichtenfilter und/oder eine Routingeinheit zum Routen der zumindest eine Nachricht auf. Eine Firewall kann auf der Grundlage des Internetprotokolls (IP) und damit in vorteilhafter Weise unabhängig von einem Nachrichteninhalt der Nachricht realisiert sein. Zusätzlich oder alternativ dazu kann die Firewall eine Überwachung oder Überprüfung des Serviceprotokolls (Protokoll oberhalb des IP im ISO/OSI-Referenzmodell) vorsehen (ISO - International Organization for Standardization; OSI - Open Systems Interconnection). Hierdurch ergibt sich der Vorteil, dass auch eine solche Nachricht als manipuliert erkannt wird, die eine Betriebssoftware des adressierten Steuergeräts zu manipulieren ausgelegt ist, dabei aber gemäß dem IP korrekt erzeugt ist. Ein Beispiel für eine solche Nachricht ist eine sogenannte Stack-Overflow-Attacke. Ein Nachrichtenfilter kann zwischen Nachrichten unterschiedlicher Klassen unterscheiden, beispielsweise zwischen einer Nachricht zum Mitteilen eines Messwerts einerseits und einer Nachricht zum Vorgeben eines Steuerbefehls andererseits. So kann das Nachrichtenfilter zum Beispiel Nachrichten für Messwerte durchlassen, aber Nachrichten mit Steuerbefehlen blockieren. Ein Nachrichtenfilter kann somit auf der Grundlage eines Nachrichteninhalts oder der Nutzdaten, die zwischen einer jeweiligen Betriebssoftware zweier Steuergeräte ausgetauscht werden, eine Nachricht herausfiltern. Eine Routingeinheit kann durch Vorsehen unterschiedlicher Nachrichtenprotokolle oder Übertragungsprotokolle für die unterschiedlichen Sicherheitszonen diese voneinander trennen. Durch die Routingeinheit kann dann eine Nachricht aus einer Sicherheitszone, die in einem ersten Nachrichtenprotokoll abgefasst ist, in eine zweites Nachrichtenprotokoll übersetzt und in der anderen Sicherheitszone weitergeleitet werden. Durch die Konfiguration einer Firewall und/oder eines Nachrichtenfilters und/oder einer Routingeinheit ergibt sich jeweils das besagte Sicherheitskriterium, anhand dessen entschieden werden kann, ob eine Nachricht weitergeleitet oder blockiert wird.

Eine bevorzugte Ausführungsform sieht vor, dass durch die Sicherheitszonen eine Baumhierarchie gebildet ist, durch welche jeweils zumindest zwei der Domänenkontrolleinrichtungen durch eine jeweilige übergeordnete Domänenkontrolleinrichtung zusammengefasst sind. Mit "zusammenfassen" ist gemeint, dass die zwei Domänenkontrolleinrichtungen über die übergeordnete Domänenkontrolleinrichtung gekoppelt sind und zum Erreichen der Sicherheitszone einer der Domänenkontrolleinrichtungen durch eine zu übertragende Nachricht sowohl das Sicherheitskriterium der übergeordneten Domänenkontrolleinrichtung als auch das Sicherheitskriterium der Domänenkontrolleinrichtung der Sicherheitszone selbst erfüllt werden muss. Hierdurch kann eine Anzahl von Domänenkontrolleinrichtungen, die eine Nachricht auf dem Weg vom sendenden Steuergerät zum empfangenden Steuergerät passieren oder durchlaufen oder überwinden muss, für einen gegebenen Sendeplan von Nachrichten in einem Kraftfahrzeug minimiert werden.

Mittels des erfindungsgemäßen Datennetzwerks kann auch ein fahrzeugexternes Datennetzwerk oder fahrzeugfremdes Gerät eingebunden werden. Hierzu ist bevorzugt eine Kommunikationseinrichtung dazu eingerichtet, das Datennetzwerk über eine Funkverbindung mit zumindest einem fahrzeugfremden Gerät und/oder fahrzeugfremden Datennetzwerk zu koppeln und dieses jeweils in einer eigenen Sicherheitszone zu betreiben. Die Kommunikationseinrichtung kann zum Beispiel ein Mobilfunkmodul und/oder ein Bluetooth-Funkmodul und/oder ein WLAN-Funkmodul (WLAN - Wireless Local Area Network) umfassen. Entsprechend kann die jeweilige Funkverbindung eine Mobilfunkverbindung oder eine Bluetooth-Verbindung oder eine WLAN-Verbindung sein. Ein fahrzeugfremdes Gerät kann zum Beispiel ein mobiles Endgerät, wie zum Beispiel ein Smartphone oder ein Tablett-PC oder eine Smartwatch, sein. Ein solches mobiles Endgerät kann über die Funkverbindung an das Kraftfahrzeug angebunden sein kann. Ein fahrzeugfremdes Gerät kann auch über eine kabelgebundene Kommunikationsverbindung, zum Beispiel eine USB-Verbindung (USB - Universal Serial Bus) an das Datennetzwerk angekoppelt sein. Ein fahrzeugfremdes Datennetzwerk kann zum Beispiel das Internet sein oder eine Tunnel-Verbindung (VPN - Virtual Private Network) zu einer Servervorrichtung. Jedes fahrzeugfremde Gerät und/oder fahrzeugfremde Datennetzwerk ist durch Bereitstellen einer eigenen Sicherheitszone von den Steuergeräten des Kraftfahrzeugs mittels zumindest einer Domänenkontrolleinrichtung getrennt.

Eine Domänenkontrolleinrichtung kann zum Beispiel ein weiteres Steuergerät oder ein Gateway oder ein Router oder ein Switch (Netzwerkweiche) sein. Das Datennetzwerk kann zumindest eine der folgenden Netzwerktechnologien umfassen: Ethernet, CAN (Controller Area Network), FlexRay, MOST (Media Oriented Systems Transport). Die Grenzen der jeweiligen Netzwerktechnologie können hierbei von den Grenzen der Sicherheitszonen verschieden sein. Mit anderen Worten kann das Datennetzwerk eine hybride Vernetzung aufweisen, durch welche zumindest zwei unterschiedliche Netzwerktechnologien kombiniert sind, wobei insbesondere zumindest eine Sicherheitszone zumindest zwei der Netzwerktechnologien aufweisen kann. Hierdurch ist eine Kommunikation zwischen den beiden Netzwerktechnologien, also das Übertragen zumindest einer Nachricht über die Grenzen der Netzwerktechnologien hinweg möglich, ohne dass dies verlangsamt oder ineffizient würde, weil hierbei auch eine Domänenkontrolleinrichtung jede Nachricht überprüfen müsste.

Wie bereits ausgeführt, kann das Sicherheitskriterium durch eine Konfiguration einer Firewall oder eines Nachrichtenfilters vorgegeben oder eingestellt werden. Das Sicherheitskriterium umfasst bevorzugt zusätzlich oder alternativ dazu, dass ein Absender und/oder ein Adressat der zu übertragenden Nachricht mit einer jeweils vorbestimmten Steuergeräteangabe übereinstimmt. Mit anderen Worten muss die Nachricht von einem vorbestimmten Absender kommen und/oder an zumindest einen vorbestimmten Adressat gerichtet sein. Zusätzlich oder alternativ dazu kann das Sicherheitskriterium umfassen, dass ein Nachrichtentyp der zu übertragenden Nachricht mit einer vorbestimmten Typangabe übereinstimmt. Dies wurde bereits im Zusammenhang mit der Unterscheidung zwischen einem Messwert und einem Steuerbefehl geschrieben. Zusätzlich oder alternativ dazu kann das Sicherheitskriterium umfassen, dass die zu übertragende Nachricht eine vorbestimmte Plausibilitätsbedingung erfüllt. Beispielsweise kann eine Rate oder Häufigkeit von Nachrichten eines vorgegebenen Nachrichtentyps innerhalb eines vorbestimmten Werteintervalls gefordert sein. Zusätzlich oder alternativ dazu kann ein Nachrichteninhalt, zum Beispiel ein Messwert, dahingehend überprüft werden, ob er innerhalb eines vorbestimmten Bereichs liegt.

Das erfindungsgemäße Kraftfahrzeug ist bevorzugt als Kraftwagen, insbesondere als Personenkraftwagen oder Lastkraftwagen, ausgestaltet.

Zu der Erfindung gehört auch ein Verfahren zum Betreiben eines fahrzeuginternen Datennetzwerks in einem Kraftfahrzeug. Das Datennetzwerk koppelt in der beschriebenen Weise Steuergeräte des Kraftfahrzeugs zum Austauschen von Nachrichten miteinander. Das Datennetzwerk ist in mehrere Sicherheitszonen unterteilt, innerhalb welcher jeweils zumindest eines der Steuergeräte angeordnet ist. Domänenkontrolleinrichtungen halten jeweils zumindest zwei der Sicherheitszonen voneinander getrennt, indem jede Domänenkontrolleinrichtung jeweils zumindest eine der Nachrichten zwischen zumindest zwei der durch sie getrennten Sicherheitszonen nur überträgt, falls die Nachricht ein vorbestimmtes Sicherheitskriterium erfüllt, und die Übertragung der Nachricht bei verletztem Sicherheitskriterium ansonsten blockiert.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In der Figur sind funktionsgleiche Elemente jeweils mit denselben Bezugszeichen versehen.

Die Figur zeigt ein Kraftfahrzeug 10, bei dem es sich zum Beispiel um einen Kraftwagen, insbesondere einen Personenkraftwagen oder Lastkraftwagen, handeln kann. Des Weiteren sind eine Servervorrichtung 11, das Internet 12 und ein Mobilfunknetzwerk 13 dargestellt. Die Servervorrichtung 11 kann über eine Internetverbindung 14 und eine Funkverbindung 15 des Mobilfunknetzwerks 13 mit einer Kommunikationseinrichtung 16 des Kraftfahrzeugs gekoppelt sein. Anstelle des Mobilfunknetzwerks 13 kann die Funkverbindung 15 auch beispielsweise durch einen WLAN-Router bereitgestellte sein. Die Servervorrichtung 27 kann z.B. ein Server des Internets sein, also ein Computer oder ein Computerverbund, der an das Internet angeschlossen ist. In dem Kraftfahrzeug 10 kann ein Datennetzwerk 17 bereitgestellt sein, das auch mehrere unterschiedliche Netzwerk-Technologien, zum Beispiel ein Ethernet ETH und/oder einen CAN-Bus CAN, umfassen kann.

Die Servervorrichtung 11 kann über die Kommunikationseinrichtung 16 mit dem Datennetzwerk 17 gekoppelt sein. Die Kommunikationseinrichtung 16 kann hierzu beispielsweise als ein Mobilfunkmodul und/oder ein WLAN-Funkmodul ausgestaltet sein.

An das Datennetzwerk 17 kann des Weiteren ein mobiles Endgerät 18 gekoppelt sein, beispielsweise über eine Funkverbindung 19, die mittels eines Bluetooth-Funkmoduls 20 (BT) des Kraftfahrzeugs 10 bereitgestellt sein kann. Zusätzlich oder alternativ zur Funkverbindung 19 kann auch beispielsweise eine kabelgebundene Kommunikationsverbindung z.B. für einen USB-Anschluss (nicht dargestellt) vorgesehen sein. Das Endgerät 18 kann zum Beispiel ein Smartphone und/oder ein Tablett-PC oder eine Smartwatch sein.

Innerhalb des Datennetzwerks 17 des Kraftfahrzeugs 10 können Steuergeräte 21 untereinander zum Austauschen von Nachrichten 23 durch Datenleitungen und/oder Funkverbindungen verbunden oder gekoppelt sein. Zumindest eines oder einige der Steuergeräte 21 kann auch jeweils Nachrichten 24 mit der Servervorrichtung 11 und/oder dem Endgerät 16 austauschen. Ein Steuergerät 21 kann jeweils zum Beispiel ein Motorsteuergerät oder ein Sitzsteuergerät oder ein Infotainment-Steuergerät (Infotainment - Information-Unterhaltung) oder ein ESC-Steuergerät (ESC - elektronische Stabilitätskontrolle) sein.

Je nach Steuergerät 21 kann sich eine Manipulation des Steuergerätes 21, welche die Betriebsweise des Steuergeräts 21 beeinträchtigt, unterschiedlich auf die Fahrsicherheit des Kraftfahrzeugs 10 auswirken. Eine solche Manipulation kann beispielsweise durch eine manipulierte Nachricht 23, 24 oder durch ein unkontrolliertes Senden solcher Nachrichten 23, 24 durch ein defektes anderes Steuergerät verursacht werden (z.B. sogenannter "Babbling Idiot").

Bei dem Kraftfahrzeug 10 können die Steuergeräte 21 je nach Absicherungsbedarf in unterschiedliche Gruppen eingeteilt sein, die wiederum voneinander durch Sicherheitsmaßnahmen getrennt sind.

Hierzu kann das Datennetzwerk 17 in Sicherheitszonen 25, 26 eingeteilt oder unterteilt sein. Trotz stark untereinander und mit der Außenwelt vernetzter Steuergeräte 21 kann durch diese Sicherheitszonen 25, 26 innerhalb der fahrzeuginternen, hybriden Vernetzung eine unkontrollierte oder unüberprüfte Übertragung von Nachrichten 23, 24 zwischen Steuergeräten 21 unterschiedlicher Sicherheitszonen 25, 26 blockiert oder vermieden werden. Die Sicherheitszonen 25, 26 stellen hierzu eine physikalische und/oder logische Segmentbildung oder Zonenbildung dar, wobei in jeder Sicherheitszone 25, 26 Steuergeräte 21 ähnlicher Kritikalität oder mit einem ähnlichen Sicherheitsbedürfnis, beispielsweise gemessen am ASIL, zusammengefasst sein können. Z.B. können Steuergeräte 21 mit gleichem ASIL zusammengefasst sein.

Die Sicherheitszonen 25, 26 können untereinander jeweils durch eine Domänenkontrolleinrichtung 27 getrennt sein. Jede Domänenkontrolleinrichtung 27 kann jeweils beispielsweise durch ein Steuergerät 22 bereitgestellt oder realisiert sein. Durch eine solche Domänenkontrolleinrichtung 27 kann zwischen zwei Sicherheitszonen 25, 26 jeweils beispielsweise eine Firewall und/oder eine Protokollübersetzung oder Protokollumsetzung auf einer oder mehreren oder allen Protokollschichten gemäß dem ISO/OSI-Referenzmodell bereitgestellt sein. Für die logische Trennung können für Ethernet-Netzwerke ETH z.B. VLANs zum Einsatz kommen in Kombination mit IP- und Serviceprotokoll-Firewalls (Serviceprotokoll: Protokoll oberhalb des IP-Protokoll im ISO/OSI-Referenzmodell).

Eine Sicherheitszone 26 zu einem fahrzeugexternen Gerät, wie der Servervorrichtung 11, kann beispielsweise auf der Grundlage eines sicheren Tunnels, also zum Beispiel eines VPN, gebildet sein. Auch eine Anbindung des mobilen Endgeräts 18 kann durch eine Domänenkontrolleinrichtung 27 als eigene Sicherheitszone 26 von den übrigen Sicherheitszonen 25 des Datennetzwerks 17 getrennt oder isoliert sein.

Durch die jeweilige Konfiguration einer Firewall und/oder der Protokollumsetzung ergibt sich für jede Domänenkontrolleinrichtung 27 ein Sicherheitskriterium 28, anhand welchem eine Nachricht 23, die zwischen zwei Sicherheitszonen 25, 26 durch die Domänenkontrolleinrichtung 27 übertragen werden soll, daraufhin überprüft werden kann, ob die Nachricht 23, 24 von der Domänenkontrolleinrichtung 27 übertragen oder blockiert werden soll.

Die Darstellung des Datennetzwerks 17 in der Figur veranschaulicht, wie durch die Anordnung der Domänenkontrolleinrichtungen 27 im Datennetzwerk 17 dieses eine Baumhierarchie 29 aufweisen kann. Eine der Domänenkontrolleinrichtungen 27 kann die Wurzel 31 der Baumhierarchie 30 darstellen, von welcher aus weitere der Domänenkontrolleinrichtungen 27 jeweils einen Knoten 32 in der Baumhierarchie 30 darstellen können.

Im Kraftfahrzeug 10 können die Sicherheitszonen 25, 26 die Sicherheit durch eine durchgängige Sicherheitsarchitektur zwischen elektrischen und/oder elektronischen Steuergeräten 21 erhöhen. In vorteilhafter Weise kann hierbei auch eine fahrzeugfremde Servervorrichtung 11 integriert sein.

Insgesamt zeigen die Beispiele, wie durch die Erfindung Sicherheitszonen in der Hard- und Software-Architektur eines Kraftfahrzeugs bereitgestellt werden können.

## Patentansprüche

1. Kraftfahrzeug (10) mit einem fahrzeuginternen Datennetzwerk (17), durch welches Steuergeräte (21) des Kraftfahrzeugs (10) zum Austauschen von Nachrichten (23) miteinander gekoppelt sind, wobei das Datennetzwerk (17) in mehrere Sicherheitszonen (25), innerhalb welcher jeweils zumindest eines der Steuergeräte (21) angeordnet ist, unterteilt ist und Domänenkontrolleinrichtungen (27) bereitgestellt sind, von denen jede jeweils zumindest zwei der Sicherheitszonen (25) voneinander trennt und dazu eingerichtet ist, zumindest eine der Nachrichten (23) zwischen zumindest zwei der von ihr getrennten Sicherheitszonen (25) zu übertragen, falls die Nachricht (23) ein vorbestimmtes Sicherheitskriterium (28) erfüllt, und die Übertragung der Nachricht (23) bei verletztem Sicherheitskriterium (28) zu blockieren,
**dadurch gekennzeichnet, dass**
das Sicherheitskriterium (28) umfasst, dass ein Absender und/oder ein Adressat der zu übertragenden Nachricht (23) mit einer jeweils vorbestimmten Steuergeräteangabe übereinstimmt und/oder dass ein Nachrichtentyp der zu übertragenden Nachricht (23) mit einer vorbestimmten Typangabe übereinstimmt und/oder dass die zu übertragende Nachricht (23) eine vorbestimmte Plausibilitätsbedingung erfüllt, und
zumindest zwei der Sicherheitszonen (25) logisch voneinander getrennt sind, indem die logisch voneinander getrennten Sicherheitszonen (25) jeweils als ein VLAN realisiert sind und die logische Zonenbildung bei Nutzung einer gemeinsamen Datenleitung für die Sicherheitszonen (25) erfolgt, wobei diese Sicherheitszonen (25) in dem Datennetzwerk (17) logisch voneinander getrennt, aber dennoch für den bedingten Nachrichtenaustausch untereinander gekoppelt sind.

2. Kraftfahrzeug (10) nach Anspruch 1, wobei zumindest zwei der Sicherheitszonen (25) physikalisch voneinander getrennt sind, indem das Datennetzwerk in die physikalisch getrennten Sicherheitszonen (25) jeweils eine eigene Datenleitung aufweisen.

3. Kraftfahrzeug (10) nach einem der vorhergehenden Ansprüche, wobei zumindest eine der Domänenkontrolleinrichtungen (27) zum Trennen der von ihr getrennten Sicherheitszonen (25) eine Firewall und/oder einen Nachrichtenfilter und/oder eine Routingeinheit zum Routen der zumindest einen Nachricht (23) aufweist.

4. Kraftfahrzeug (10) nach einem der vorhergehenden Ansprüche, wobei durch die Sicherheitszonen (25) eine Baumhierarchie (29) gebildet ist, durch welche jeweils zumindest zwei der Domänenkontrolleinrichtungen (27) durch eine jeweilige übergeordnete Domänenkontrolleinrichtung (27) zusammengefasst sind.

5. Kraftfahrzeug (10) nach einem der vorhergehenden Ansprüche, wobei eine Kommunikationseinrichtung (16) dazu eingerichtet ist, das Datennetzwerk (17) über eine Funkverbindung (15, 19) und/oder eine kabelgebundene Kommunikationsverbindung mit zumindest einem fahrzeugfremden Gerät (18) und/oder fahrzeugfremden Datennetzwerk (12) zu koppeln und dieses jeweils in einer eigene Sicherheitszone (26) zu betreiben.

6. Kraftfahrzeug (10) nach einem der vorhergehenden Ansprüche, wobei das Datennetzwerk (17) zumindest eine der folgenden Netzwerktechnologien umfasst: Ethernet (ETH), CAN (CAN), FlexRay, MOST.

7. Kraftfahrzeug (10) nach einem der vorhergehenden Ansprüche, wobei das Datennetzwerk (17) eine hybride Vernetzung aufweist, durch welche zumindest zwei unterschiedliche Netzwerktechnologien (ETH, CAN) kombiniert sind, wobei insbesondere zumindest eine Sicherheitszone (25) zumindest zwei der Netzwerktechnologien (ETH, CAN) aufweist.

8. Verfahren zum Betreiben eines fahrzeuginternen Datennetzwerks (17) in einem Kraftfahrzeug (10), wobei das Datennetzwerk (17) Steuergeräte (21) des Kraftfahrzeugs (10) zum Austauschen von Nachrichten (23) miteinander koppelt, wobei
das Datennetzwerk (17) in mehrere Sicherheitszonen (25), innerhalb welcher jeweils zumindest eines der Steuergeräte (21) angeordnet ist, unterteilt ist und Domänenkontrolleinrichtungen (27) jeweils zumindest zwei der Sicherheitszonen (25) voneinander getrennt halten und jede Domänenkontrolleinrichtung (27) jeweils zumindest eine der Nachrichten (23) zwischen zumindest zwei der durch sie getrennten Sicherheitszonen (25) überträgt, falls die Nachricht (23) ein vorbestimmtes Sicherheitskriterium (28) erfüllt, und die Übertragung der Nachricht (23) bei verletztem Sicherheitskriterium (28) blockiert,
**dadurch gekennzeichnet, dass** das Sicherheitskriterium (28) umfasst, dass ein Absender und/ oder ein Adressat der zu übertragenden Nachricht (23) mit einer jeweils vorbestimmten Steuergeräteangabe übereinstimmt und/oder dass ein Nachrichtentyp der zu übertragenden Nachricht (23) mit einer vorbestimmten Typangabe übereinstimmt und/oder dass die zu übertragende Nachricht (23) eine vorbestimmte Plausibilitätsbedingung erfüllt, und zumindest zwei der Sicherheitszonen (25) logisch voneinander getrennt werden, indem die logisch voneinander getrennten Sicherheitszonen (25) jeweils als ein VLAN realisiert werden und die logische Zonenbildung bei Nutzung einer gemeinsamen Datenleitung für die Sicherheitszonen (25) erfolgt, wobei diese Sicherheitszonen (25) in dem Datennetzwerk (17) logisch voneinander getrennt, aber dennoch für den bedingten Nachrichtenaustausch untereinander gekoppelt sind.

## Claims

1. Motor vehicle (10) with a vehicle-internal data network (17), by means of which control devices (21) of the motor vehicle (10) are coupled with one another for exchanging messages (23), wherein the data network (17) is divided into several security zones (25), within which respectively at least one of the control devices (21) is disposed, and domain control devices (27) are provided of which each separates in each case at least two of the security zones (25) from one another and is configured to transmit at least one of the messages (23) between at least two of the security zones (25), separated therefrom, in the case that the message (23) fulfils a predetermined security criterion (28), and to block the transmission of the message (23) if the security criterion (28) is violated,
**characterised in that**
the security criterion (28) comprises that a sender and/or an addressee of the message (23) to be transmitted corresponds with a respectively predetermined control device specification and/or that a message type of the message (23) to be transmitted corresponds with a predetermined type specification and/or that the message (23) to be transmitted fulfils a predetermined plausibility condition, and
at least two of the security zones (25) are logically separated from one another, **in that** the security zones (25), logically separated from one another, are respectively realised as a VLAN and the logical zone formation is carried out when using a shared data line for the security zones (25), wherein these security zones (25) are logically separated from one another in the data network (17), but are nevertheless coupled together for the conditional exchange of messages.

2. Motor vehicle (10) according to claim 1, wherein at least two of the security zones (25) are physically separated from one another, in that the data network into the physically separated security zones (25) have in each case its own data line.

3. Motor vehicle (10) according to any of the preceding claims, wherein at least one of the domain control devices (27) for separating the security zones (25) separated from it has a firewall and/a message filter and/or a routing unit for routing the at least one message (23).

4. Motor vehicle (10) according to any of the preceding claims, wherein by the security zones (25) is formed a tree hierarchy (29) by means of which respectively at least two of the domain control devices (27) are combined by a respectively superordinate domain control device (27).

5. Motor vehicle (10) according to any of the preceding claims, wherein a communication device (16) is configured to couple the data network (17) via a radio connection (15, 19) and/or a wired communication connection with at least one device (18) not related to the vehicle and/or data network (12) not related to the vehicle and to operate this respectively in its own security zone (26).

6. Motor vehicle (10) according to any of the preceding claims, wherein the data network (17) includes at least one of the following network technologies: Ethernet (ETH), CAN (CAN), FlexRay, MOST.

7. Motor vehicle (10) according to any of the preceding claims, wherein the data network (17) has a hybrid networking, by means of which at least two different network technologies (ETH, CAN) are combined, wherein in particular at least one security zone (25) has at least two of the network technologies (ETH, CAN).

8. Method for operating a vehicle-internal data network (17) in a motor vehicle (10), wherein the data network (17) couples control devices (21) of the motor vehicle (10) for exchanging messages (23), wherein
the data network (17) is divided into several security zones (25), within which respectively at least one of the control devices (21) is disposed and domain control devices (27) keep respectively at least two of the security zones (25) separate from one another and each domain control device (27) transmits respectively at least one of the messages (23) between at least two of the security zones (25) separated by it, in the case that the message (23) fulfils a predetermined security criterion (28), and blocks the transmission of the message (23) if the security criterion (28) is violated,
**characterised in that**
the security criterion (28) includes that a sender and/or an addressee of the message (23) to be transmitted corresponds with a respectively predetermined control device specification and/or that a message type of the message (23) to be transmitted corresponds with a predetermined type specification and/or that the message (23) to be transmitted fulfils a predetermined plausibility criterion, and
at least two of the security zones (25) are logically separated from one another, **in that** the security zones (25), logically separated from one another, are realised respectively as a VLAN and the logical zone formation is carried out when using a shared data line for the security zones (25), wherein these security zones (25) are logically separated from one another in the data network (17), but are nevertheless coupled together for the conditional exchange of messages.

## Revendications

1. Véhicule automobile (10) avec un réseau de données embarqué (17) grâce auquel des appareils de commande (21) du véhicule automobile (10) sont couplés les uns aux autres afin d'échanger des messages (23), dans lequel
le réseau de données (17) est divisé en plusieurs zones de sécurité (25) au sein desquelles est agencé respectivement au moins un des appareils de commande (21), et des dispositifs de contrôle de domaine (27) sont fournis, chacun d'eux séparant l'une de l'autre respectivement au moins deux des zones de sécurité (25) et étant conçu pour transmettre au moins un des messages (23) entre au moins deux des zones de sécurité (25) séparées par ledit dispositif si le message (23) satisfait à un critère de sécurité (28) prédéterminé et pour bloquer la transmission du message (23) si le critère de sécurité (28) n'est pas respecté,
**caractérisé en ce que**
le critère de sécurité (28) comprend le fait qu'un expéditeur et/ou un destinataire du message (23) à transmettre correspond à une indication d'appareil de commande respectivement prédéterminée et/ou le fait qu'un type de message du message (23) à transmettre correspond à une indication de type prédéterminée et/ou le fait que le message (23) à transmettre satisfait à une condition de plausibilité prédéterminée, et
au moins deux des zones de sécurité (25) sont séparées l'une de l'autre de manière logique du fait que les zones de sécurité (25) séparées les unes des autres de manière logique sont réalisées respectivement sous la forme d'un VLAN et que la formation de zone logique survient avec l'utilisation d'une ligne de données commune pour les zones de sécurité (25), dans lequel lesdites zones de sécurité (25) sont séparées les unes des autres de manière logique au sein du réseau de données (17) mais sont néanmoins couplées les unes aux autres pour l'échange conditionné de messages.

2. Véhicule automobile (10) selon la revendication 1, dans lequel au moins deux des zones de sécurité (25) sont séparées les unes des autres de manière physique, du fait que le réseau de données présente respectivement une ligne de données propre dans les zones de sécurité (25) séparées de manière physique.

3. Véhicule automobile (10) selon l'une quelconque des revendications précédentes, dans lequel au moins un des dispositifs de contrôle de domaine (27) présente un pare-feu et/ou un filtre de messages et/ou une unité de routage destinée à router le au moins un message (23), afin de séparer les zones de sécurité (25) séparées par ledit dispositif.

4. Véhicule automobile (10) selon l'une quelconque des revendications précédentes, dans lequel une hiérarchie arborescente (29), grâce à laquelle respectivement au moins deux des dispositifs de contrôle de domaine (27) sont regroupés par un dispositif de contrôle de domaine (27) respectif de niveau supérieur, est formée grâce aux zones de sécurité (25).

5. Véhicule automobile (10) selon l'une quelconque des revendications précédentes, dans lequel un dispositif de communication (16) est conçu pour coupler le réseau de données (17) à au moins un dispositif (18) extérieur au véhicule et/ou à un réseau de données (12) extérieur au véhicule par l'intermédiaire d'une liaison radio (15, 19) et/ou d'une liaison de communication par câble et pour faire fonctionner ledit réseau dans une zone de sécurité (26) propre.

6. Véhicule automobile (10) selon l'une quelconque des revendications précédentes, dans lequel le réseau de données (17) comprend au moins une des technologies de réseau ci-dessous : Ethernet (ETH), CAN (CAN), FlexRay, MOST.

7. Véhicule automobile (10) selon l'une quelconque des revendications précédentes, dans lequel le réseau de données (17) présente un réseau hybride grâce auquel au moins deux technologies de réseau différentes (ETH, CAN) sont combinées, dans lequel en particulier au moins une zone de sécurité (25) présente au moins deux des technologies de réseau (ETH, CAN).

8. Procédé de fonctionnement d'un réseau de données embarqué (17) dans un véhicule automobile (10), dans lequel le réseau de données (17) couple des appareils de commande (21) du véhicule automobile (10) entre eux afin d'échanger des messages (23), dans lequel
le réseau de données (17) est divisé en plusieurs zones de sécurité (25) au sein desquelles est agencé respectivement au moins un des appareils de commande (21), et des dispositifs de contrôle de domaine (27) maintiennent séparées l'une de l'autre respectivement au moins deux des zones de sécurité (25) et chaque dispositif de contrôle de domaine (27) transmet respectivement au moins un des messages (23) entre au moins deux des zones de sécurité (25) séparées par ledit dispositif si le message (23) satisfait à un critère de sécurité (28) prédéterminé, et bloque la transmission du message (23) si le critère de sécurité (28) n'est pas respecté,
**caractérisé en ce que**
le critère de sécurité (28) comprend le fait qu'un expéditeur et/ou un destinataire du message (23) à transmettre correspond à une indication d'appareil de commande respectivement prédéterminée et/ou le fait qu'un type de message du message (23) à transmettre correspond à une indication de type prédéterminée et/ou le fait que le message (23) à transmettre satisfait à une condition de plausibilité prédéterminée, et
au moins deux des zones de sécurité (25) sont séparées l'une de l'autre de manière logique du fait que les zones de sécurité (25) séparées les unes des autres de manière logique sont réalisées respectivement sous la forme d'un VLAN et que la formation de zone logique survient avec l'utilisation d'une ligne de données commune pour les zones de sécurité (25), dans lequel lesdites zones de sécurité (25) sont séparées les unes des autres de manière logique au sein du réseau de données (17) mais sont néanmoins couplées les unes aux autres pour l'échange conditionné de messages.
